# EUROPÄISCHE PATENTSCHRIFT

(11) **EP 3 984 254 B1**
(45) Veröffentlichungstag und Bekanntmachung des Hinweises auf die Patenterteilung: **12.03.2025**
(21) Anmeldenummer: 19733418.8
(22) Anmeldetag: 14.06.2019
(51) Int. Cl.: H04W 4/02, H04W 4/021, H04W 4/029, G06Q 30/06, G01S 1/04, G01S 5/02, H02J 7/34, H02J 50/20, H04W 4/33, H04W 4/38, H02J 50/80, H02J 50/40, H02J 50/90, H04W 4/80

(54) **VERFAHREN ZUM ORTEN EINES ELEKTRONISCHEN REGALETIKETTS**
METHOD FOR LOCATING AN ELECTRONIC SHELF LABEL
PROCEDE DE LOCALISATION D'UNE ETIQUETTE ELECTRONIQUE DE RAYONNAGE

(43) Veröffentlichungstag der Anmeldung: 20.04.2022
(73) Patentinhaber: VusionGroup GmbH, 8072 Fernitz-Mellach (AT)
(72) Erfinder: RÖßL, Andreas, 8072 Fernitz-Mellach (AT)
(74) Vertreter: Schneider, Michael
(86) Internationale Anmeldenummer: PCT/EP2019/065718
(87) Internationale Veröffentlichungsnummer: WO 2020/249232

(56) Entgegenhaltungen:
- WO-A1-2015/172822
- US-A1- 2001 048 057
- US-A1- 2004 035 927
- US-A1- 2006 163 349

## Beschreibung

### Technisches Feld

Die Erfindung betrifft ein Verfahren zum Orten eines elektronischen Regaletiketts.

### Hintergrund.

Ein solches Verfahren ist aus der internationalen Patentanmeldung mit Veröffentlichungsnummer WO2015/172822A1 bekannt. Bei diesem Verfahren wird in einer Gruppe von elektronischen Regaletiketten, die als elektronische Regaletikettenanzeigen realisiert sind, die im Fachjargon als "Electronic Shelf Labels", kurz ESLs, bezeichnet werden, und die funktechnisch (durch initiale Registrierung) einem einzigen Access-Point zugeordnet sind, eine ortsunbekannte Regaletikettenanzeige mit Hilfe einer Gruppe ortsbekannter Regaletikettenanzeigen lokalisiert. Die Ortung der ortsunbekannten Regaletikettenanzeige erfolgt hierbei ausschließlich unter Auswertung eines in der Gruppe der Regaletikettenanzeigen generierten, ausgesandten und auch empfangenen Ortungssignals. Dabei bilden die ortsbekannten Regaletikettenanzeigen das Bezugssystem, in dem die ortsunbekannte Regaletikettenanzeige gesucht wird.

Dieses Verfahren ist sehr leistungsfähig. Die Qualität des letztendlich vom Benutzer des Systems wahrgenommenen Ortung-Ergebnisses ist jedoch von der Rahmenbedingung abhängig, dass sich die Position der ortsbekannten Regaletikettenanzeigen im Raum nicht verändern darf. Eine von dieser Rahmenbedingung abweichende Situation wäre beispielsweise dann gegeben, wenn ein ganzes Regal mit samt den an ihm installierten Regaletikettenanzeigen in einem Geschäftslokal von einem Ort zu einem anderen (neuen) Ort vertragen wird, wobei sich der neue Ort weiterhin innerhalb des Funkbereichs jenes Access-Points befindet, dem die betroffenen (vertragenen) Regaletikettenanzeigen funktechnisch zugeordnet sind. Würden in weiterer Folge die neuen Orte der betroffenen Regaletikettenanzeigen nicht im elektronischen ESL-Verwaltungssystem des Geschäftes manuell ausgebessert werden, wären die mit ihrer Hilfe erzielbaren Ortung-Ergebnisse im Wesentlichen nutzlos oder irreführend.

Die Erfindung hat sich die Aufgabe gestellt, ein verbessertes Verfahren zum Orten eines elektronischen Regaletiketts in einem ESL-System bereitzustellen, bei dem die vorstehend genannten Probleme überwunden sind.

### Zusammenfassung der Erfindung

Diese Aufgabe wird durch ein Verfahren gemäß Anspruch 1 gelöst. Der Gegenstand der Erfindung ist somit ein Verfahren zum Orten eines ortsunbekannten elektronischen Regaletiketts, insbesondere realisiert als elektronische Regaletikettenanzeige, eines elektronischen Regaletiketten-System, wobei das System aufweist eine Anzahl von ortsbekannten Access-Points, die an unterschiedlichen Positionen jeweils in einem Abstand zu einem Regal positioniert sind, wobei das Regal zumindest eine Regalschiene aufweist und wobei eine der Regalschienen zumindest ein elektronisches Regaletikett, das kontaktlos mit Energie versorgbar ausgebildet ist, und eine an der Regalschiene lokalisierte elektronische Versorgung-Einrichtung aufweist, die zur kontaktlosen Energieversorgung des zumindest einen Regaletiketts ausgebildet ist, wobei das Verfahren die folgenden Verfahrensschritte aufweist, nämlich Bestimmen der Position der elektronischen Versorgung-Einrichtung in Bezug auf die ortsbekannten Access-Points durch Verwendung einer Ultrabreitband-Funkkommunikation zwischen den Access-Points und der Versorgung-Einrichtung.

Mit den erfindungsgemäßen Maßnahmen geht der Vorteil einher, dass in Abkehr von bekannten Maßnahmen die Ortsbestimmung für ein, jedoch auch mehrere, Regaletikett(en) nicht mehr davon abhängig ist, dass die absolute Position anderer Regaletiketten bekannt ist, die bei diesen bekannten Maßnahmen als statische Ankerpunkte für die Positionsbestimmung dienen. Vielmehr kommen nun dynamische Ankerpunkte realisiert durch die Versorgung-Einrichtungen zum Einsatz. Diese können im Laufe der Zeit ihre Position im Raum verändern, zum Beispiel durch ein Umstellen des Regals oder auch ein Umsortieren der Regalböden, an denen die Regalschienen befestigt sind. Bevor also eine Ortsbestimmung für ein Regaletikett erfolgt, wird zunächst eine Ortsbestimmung für die Versorgung-Einrichtung durchgeführt und darauf aufbauend, also bezogen auf diese Position der Versorgung-Einrichtung, die Position eines Regaletiketts ermittelt bzw. eingegrenzt. Dabei kommt letztendlich der Umstand zum Tragen, dass sich das Regaletikett, dessen Position zu ermitteln bzw. einzugrenzen ist, an der Regalschiene befindet, an der auch die jeweils betroffene Versorgung-Einrichtung vorgesehen bzw. lokalisiert ist. Sobald also die jeweilige Position der Versorgung-Einrichtung ermittelt wurde, ergibt sich die Position des mit Hilfe der betreffenden Versorgung-Einrichtung versorgten Regaletiketts de facto automatisch, weil dieses nur an der betreffenden Regalschiene positioniert sein kann. Da an einem Regal zumeist mehrere Regalschienen nebeneinander und/oder übereinander installiert sind und die Dimensionen (Längen) der Regalschienen (z.B. einem Server des Geschäfts) wie auch der Ort, an dem die Versorgung-Einrichtung an der Regalschiene montiert ist, bekannt sind, lässt sich auch die Orientierung des Regals und damit auch die Orientierung der Regalschienen durch die Bestimmung der Position der Vielzahl der an dem Regal installierten Versorgung-Einrichtungen auf automatische Weise (z.B. mit Hilfe des erwähnten Servers) ermitteln und somit tatsächlich die Position des jeweiligen Regaletiketts auf einen Raumbereich, in dem sich die jeweilige Regalschiene befindet, eingrenzen.

Auch hat sich die Fokussierung auf die Ortsbestimmung der individuellen Versorgung-Einrichtungen als sehr effizient erwiesen, weil eine einzige Versorgung-Einrichtung eine relativ große Anzahl an Regaletiketten, z.B. bis zu 10, 20 oder auch wesentlich mehr Stück versorgen kann. Dies ermöglicht auf einfachste Weise die Eingrenzung des Orts der Vielzahl der betroffenen Regaletiketten, wie zuvor erörtert, was das gegenständliche Ortung-Verfahren im Vergleich zu anderen Methoden, die auf eine individuelle Kommunikation zwischen dem betroffenen Regaletikett und den Access-Points setzen, erheblich beschleunigt.

Unter einer Ultrabreitband-Funkkommunikation ist eine Funkkommunikation basierend auf Ultra-Breitband-Technologie (UWB; engl.: *Ultra-wideband*) zu verstehen. Wichtigstes Merkmal ist die Nutzung extrem großer Frequenzbereiche mit einer Bandbreite von mindestens 500 MHz oder von mindestens 20 % des arithmetischen Mittelwertes von unterer und oberer Grenzfrequenz des genutzten Frequenzbereiches.

Weitere, besonders vorteilhafte Ausgestaltungen und Weiterbildungen der Erfindung ergeben sich aus den abhängigen Ansprüchen sowie der nachfolgenden Beschreibung. Dabei können Merkmale der einen Anspruchs-Kategorie entsprechend den Merkmalen der anderen Anspruchs-Kategorie weiterentwickelt werden, sodass die im Zusammenhang mit der einen Anspruchs-Kategorie angeführten Wirkungen und Vorteile auch für die andere Anspruchs-Kategorien vorliegen.

Ein solches elektronisches Regaletikett kann unterschiedlichste Funktionalitäten bereitstellen bzw. Funktionen erfüllen. Das Regaletikett kann z.B. zum Erfassen von Umgebungsparametern, wie z.B. zur Temperatur- oder auch Feuchtigkeitserfassung, oder als Eingabeelement zum Empfang einer Eingabeinteraktion eines Benutzers (z.B. Erfassen eines Fingerabdrucks oder einer Tastenbetätigung) oder auch als Anzeigemedium zur Präsentation einer Information für den Benutzer, nämlich als Regaletikettenanzeige, konfiguriert bzw. dementsprechend ausgebildet sein. In jedem Fall ist das Regaletikett derart ausgebildet, dass es an der gegenständlichen Regalschiene anbringbar ist und dort mit Energie in der nachfolgend im Detail beschriebenen Art und Weise versorgt wird.

Bei dem Verfahren basiert die Bestimmung der Position der elektronischen Versorgung-Einrichtung auf Abstandsbestimmung zwischen ihr und jedem der involvierten Access-Points unter Ausnutzung der jeweiligen Ultrabreitband-Funkkommunikation. Dabei kommt eine "Flight-of-Time" Messung, ggf. auch eine "Angle-of-Arrival" Bestimmung zum Einsatz. Damit geht eine sehr präzise Bestimmung des Orts der jeweiligen Versorgung-Einrichtung durch nachfolgende Maßnahmen wie z.B. Triangulation usw. einher.

Nachdem der Ort der Versorgung-Einrichtung bestimmt wurde erfolgt eine Identifizierung des zumindest einen an dem Regal installierten elektronischen Regaletiketts während seiner Energieversorgung.

Durch die Energieversorgung startet die Elektronik des Regaletiketts, so dass das Regaletikett mit seiner Funktionalität bereitsteht. Dann wird während der Energieversorgung des Regaletiketts dieses durch ein Abfragen seiner eindeutigen Kennung identifiziert. Diese Abfrage geschieht auch durch die Versorgung-Einrichtung. Die so ermittelte Kennung wird bei der Versorgung-Einrichtung zum Abruf bereitgestellt oder bei einer weiteren Kommunikation (kabelgebunden oder funkbasiert) zur weiteren Verarbeitung weitergeleitet.

Die kontaktlose Energieübertragung erfolgt so, dass für diesen Zweck zumindest eine an der Regalschiene ausgebildete erste Leiterschleife zum Einsatz kommt, die mit ihren zwei Schleifen-Anschlüssen an die Versorgung-Einrichtung angeschlossen ist und zur induktiven Kopplung mit einer örtlich dazu korrespondierenden (in ihrer Nähe lokalisierten) zweiten Leiterschleife des Regaletiketts dient. Erstreckt sich die Leiterschleife entlang der gesamten Länge der Regalschiene, lassen sich auf diese Weise alle entlang der Regalschiene positionierten Regaletiketten identifizieren und somit die Feststellung treffen, dass alle diese identifizierten Regaletiketten in der Nähe der Position der Versorgung-Einrichtung und dort jedenfalls entlang der Regalschiene positioniert sind. Dabei können die Regaletiketten so programmiert sein, dass sie ihre Kennung zu zufällig ausgewählten Zeitpunkten innerhalb eines Zeitfensters (einfach oder mehrfach) abgeben, um den individuellen Empfang bei der Versorgung-Einrichtung sicherzustellen. Auch kann bei dieser kontaktlosen Übertragung ein z.B. aus der RFID-Technologie bekanntes Anti-Kollision-Verfahren zur Anwendung kommen, um den individuellen Empfang bei der Versorgung-Einrichtung sicherzustellen.

Zur (genaueren / präziseren) Ermittlung der Position eines Regaletiketts entlang der Regalschiene kommen jedoch bevorzugt mehrere erste Leiterschleifen, die an unterschiedlichen Orten entlang der Regalschiene positioniert sind, zum Einsatz. Mit ihrer Hilfe lässt sich eine räumliche Auflösung entlang der Regalschiene, also entlang ihrer Längserstreckung, realisieren. Dabei hängt die Genauigkeit der Ortsbestimmung von der Anzahl und auch von der Länge der mit Hilfe der individuellen ersten Leiterschleifen abgedeckten Zonen ab.

Mit der Versorgung-Einrichtung wird mit Hilfe der individuellen ersten Leiterschleifen eine örtlich begrenzte, also eine individuelle Energieversorgung am Ort der jeweiligen ersten Leiterschleife durchgeführt, wenn dort ein Regaletikett positioniert ist. Da die Versorgung-Einrichtung darüber informiert ist, wie viele erste Leiterschleifen an ihrer Regalschiene befestigt sind und in welcher Reihenfolge und oder in welchen Abständen (von ihrer eigenen Position gemessen oder relativ von einer Leiterschleife zur nächsten gemessen) diese entlang der Regalschiene auftreten, lässt sich für das jeweilige durch Energieversorgung aktivierbare bzw. identifizierbare Regaletikett dessen Position entlang der Regalschiene ermitteln.

Die mit Hilfe der Versorgung-Einrichtung durchzuführende kontaktlose Energieversorgung kann auf einer proprietären technischen Lösung oder auf einer standardisierten Technologie wie z.B. RFID-Technologie basieren. Besonders bevorzugt kommt jedoch sowohl auf der Seite des Regaletiketts als auch auf der Seite der Versorgung-Einrichtung zur kontaktlosen Energieversorgung, insbesondere auch Identifizierung, eine NFC-Schnittstelle zur Anwendung. In diesem Kontext bildet die an der Regalschiene ausgebildete erste Leiterschleife einen Bestandteil der NFC-Schnittstelle der Versorgung-Einrichtung. Gleiches gilt auch im Fall mehrerer solcher erster Leiterschleifen, wobei die Versorgung-Vorrichtung in diesem Fall bevorzugt zum individuellen verwenden der jeweiligen ersten Leiterschleife ausgebildet ist, um zum Beispiel die ersten Leiterschleifen sequenziell nacheinander zu benutzen. Die Versorgung-Einrichtung ist hierbei bevorzugt zum selektiven (oder auch sequentiellen) Umschalten (Multiplexen) zwischen den ersten Leiterschleifen ausgebildet, um immer nur eine individuelle erste Leiterschleife zu nutzen. Ein solches Umschalten kann z.B. mit Hilfe eines sogenannten im Fachgebiet der Elektronik bekannten "analog switch" realisiert sein.

RFID steht hier für "Radio Frequency Identification". Die Technologie ist z.B. in dem Standard ISO/IEC 18000 spezifiziert.

NFC steht hier für "Near Field Communication". Die Technologie ist z.B. in den Standards ISO/IEC 13157, -16353, -22536, -28361 usw. spezifiziert.

Unter Ausnutzung der erörterten NFC-Schnittstelle lässt sich allerdings nicht nur die Position eines elektronischen Regaletiketts ermitteln, sondern auch mit Hilfe dieses Regaletiketts (als Regaletikettenanzeige realisiert) wiederzugebende Bildinhalte definieren, also an die Elektronik des Regaletiketts übermitteln. Dies geschieht bevorzugt während jener Zeitspanne, während der das Regaletikett mit Energie versorgt wird, also seine Elektronik aktiv ist, wobei entsprechende Kommando-und/oder Bildinhaltsdaten an das Regaletikett übermittelt werden. Um auch während einer Zeitspanne ohne Energieversorgung, in der die Elektronik des Regaletiketts inaktiv ist, eine statische Bildinformation mit Hilfe der Anzeigeeinheit darzustellen, weist die Regaletikettenanzeige eine energiesparende Anzeigeeinheit, insbesondere basierend auf Electronic-Ink- bzw. Electronic-Paper-Technologie usw., auf. Diese Begriffe stehen im Wesentlichen für das Prinzip einer elektrophoretischen Anzeige, bei der z.B. positiv geladene, weiße Partikel und negativ geladene, schwarze Partikel in einem transparenten zähflüssigen Polymer enthalten sind. Durch kurzzeitiges Anlegen einer Spannung an Elektroden, zwischen denen das Medium aus Partikeln und Polymer angeordnet ist, werden in Betrachtungsrichtung entweder die schwarzen vor den weißen Partikeln platziert oder umgekehrt. Diese Anordnung bleibt dann ohne weitere Energiezufuhr für relativ lange Zeit (z.B. einige Wochen) aufrecht. Segmentiert man die Anzeige entsprechend, so lassen sich z.B. Buchstaben, Zahlen oder Bilder mit relativ hoher Auflösung realisieren, um besagte Informationen anzuzeigen. Ein solcher reflektiver Bildschirm kann jedoch auch mit Hilfe anderer Technologien, die z.B. unter dem Begriff "electrowetting" oder "MEMS" bekannt sind, realisiert sein. Der Bildschirm kann z.B. wie erwähnt zur Schwarz-Weiß-Wiedergabe, zur Graustufen-Wiedergabe, zur Schwarz-Weiß-Rot- oder auch Schwarz-Weiß-Gelb-Wiedergabe ausgebildet sein. Auch sollen zukünftige Entwicklungen mitumfasst sein, die eine Voll-Farb- oder auch Multi-Color-Wiedergabe ermöglichen. Bei einem solchen Bildschirm handelt es sich ganz allgemein um einen reflektiven, also passiven, nicht selbst leuchtenden Bildschirm bei dem die - relativ statische - Informationswiedergabe darauf basiert, dass von einer externen (künstlichen oder natürlichen) Lichtquelle erzeugtes Licht auf den Bildschirm einstrahlt und von dort zum Betrachter reflektiert wird.

Das Regaletikett bzw. seine Anzeigeneinheit wird mit Hilfe der NFC-Schnittstelle einerseits mit Energie und andererseits mit Daten versorgt. Somit lassen sich während der Energieversorgung über die NFC-Schnittstelle auch Daten über diese NFC-Schnittstelle übermitteln, die von der Anzeigeeinheit dahingehend verarbeitet werden, dass sich der Bildinhalt ihres Bildschirms verändert. Nach abgeschlossener Veränderung des Bildinhalts kann von der Anzeigeeinheit über die NFC-Schnittstelle auch eine entsprechende Status-Information abgegeben werden, welche die erfolgreiche Veränderung des Bildinhalts repräsentiert. Nach abgeschlossener Veränderung des Bildinhalts, gegebenenfalls auch nach Abgabe der Status-Information, kann die Energieversorgung über die NFC-Schnittstelle beendet werden, wonach der Bildinhalt des Bildschirms bis zur nächsten gewollten Veränderung unverändert bleibt.

Der Einsatz der genannten Technologien erlaubt vor allem die Realisierung des Regaletiketts ohne eine eigene Energieversorgung wie beispielsweise eine Batterie oder einen Akkumulator, die beide relativ teuer sind. Auch muss ein konventionelles Regaletikett zwecks Wartung oder Erneuerung der Batterie oder des Akkumulators derart ausgebildet sein, dass diese Energiespeicher austauschbar sind. Gegebenenfalls kommt in dem gegenständlichen Regaletikett nur mehr ein Kondensator zur kurzfristigen, temporären Glättung bzw. Stabilisierung der internen Versorgungsspannung zur Anwendung. Das Regaletikett ist also derart ausgebildet, dass seine Elektronik zur Kommunikation oder zum Update des Bildschirminhalts, insbesondere seine elektronische Steuerung, immer nur dann aktiv ist, wenn sie mit Hilfe der externen elektronischen Versorgung-Einrichtung versorgt wird. Das Gehäuse kann vollständig und dauerhaft gekapselt sein, weil kein Austausch des Energiespeichers mehr nötig ist, so dass es sich nur mehr für Recyclingzwecke (z.B. mit Spezialwerkzeug) öffnen lässt.

Es lässt sich somit ein auf wenige, absolut benötigte elektronische Komponenten reduziertes und daher auch ein extrem günstiges Regaletikett realisieren. Dieses extrem reduzierte Regaletikett verfügt nur mehr über eine Basisfunktionalität, wie z.B. standardisierte NFC-Kommunikation mit standardisierter Energieversorgung während der NFC-Kommunikation. Diese Aufgaben lassen sich mit Hilfe eines einfachen NFC-Controllers realisieren. Updates des Bildschirms der energiesparenden Anzeigeeinheit und Statusbericht dazu, werden nicht direkt von dem Regaletikett in einer Funk-Kommunikation mit einem Access-Point erledigt, so wie dies bei bekannten Systemen der Fall ist, sondern von der zwischengeschalteten Versorgung-Einrichtung abgewickelt, die ihrerseits über eine geeignete (und im Wesentlichen frei wählbare) Funk-Kommunikationsmethode mit dem Access-Point in Kontakt stehen kann.

Für die Funk-Kommunikation mit dem Access-Point kann ein Zeitschlitz-Kommunikationsverfahren zur Anwendung kommen, insbesondere ein proprietäres Zeitschlitz-Kommunikationsverfahren wie es aus der WO2015/124197, Seiten 2 bis 4, bekannt ist.

Für die Funkkommunikation kann aber auch ein Kommunikationsprotokoll basierend auf den Standards bzw. Spezifikationen ZigBee, Bluetooth oder WiFi usw. zur Anwendung kommen.

Dementsprechend kann sowohl bei dem Access-Point wie auch bei der Versorgung-Einrichtung zusätzlich zu einem Funkmodul, das die UWB-Funkfähigkeit bereitstellt, zumindest ein weiteres Funkmodul vorgesehen sein, das eine der genannten Funktechnologien bereitstellt. Jedes der separaten Funkmodule kann eine eigene Antennenkonfiguration aufweisen, die aus einer Einzelantenne oder einer Anzahl von individuellen Antennen besteht, und eine zugehörige Elektronik enthalten. Dies ermöglicht die Nutzung der UWB-Funkkommunikation ausschließlich zur Ortsbestimmung während parallel dazu die Kommunikation über das weitere Funkmodul zur Steuerung des Regaletiketts über die Versorgung-Einrichtung frei zur Verfügung steht.

Um letztendlich zu einer absoluten Verortung der Versorgung-Einrichtung in den Räumlichkeiten eines Geschäftes, wie zum Beispiel eines Supermarkts, zu kommen, werden positionsrelevante Ergebnisse der Ultrabreitband-Funkkommunikation entweder von der Versorgung-Einrichtung oder von dem involvierten Access-Point an eine Datenverarbeitungseinrichtung zur Ortsbestimmung der Versorgung-Einrichtung(en) leitungsgebunden oder per Funk übermittelt. Diese positionsrelevanten Ergebnisse können die ermittelten Entfernungen zwischen den Kommunikationspartnern (Versorgung-Einrichtung und Access-Point) oder auch die Signallaufzeiten bei der Kommunikation zwischen den Kommunikationspartnern sein, aus denen dann die Position der jeweiligen Versorgung-Einrichtung in Bezug auf die Access-Points bestimmt wird, woraus sich aufgrund der Kenntnis der exakten Position der involvierten Access-Points dann die absolute Position der jeweiligen Versorgung-Einrichtung bestimmen lässt, was umso genauer ist, je mehr Access-Points involviert sind.

Weiterhin wird die Identität eines während seiner Energieversorgung von der Versorgung-Einrichtung identifizierten Regaletiketts an besagte Datenverarbeitungseinrichtung kommuniziert und bei der Datenverarbeitungseinrichtung der Ort des betreffenden Regaletiketts relativ zu dem zuvor bestimmten Ort der betreffenden Versorgung-Einrichtung zumindest eingegrenzt. Dabei kann wie erwähnt beispielsweise die Abmessung (Längserstreckung) der jeweiligen Regalschienen berücksichtigt werden, welche letztendlich die zulässigen Grenzen für den Abstand zwischen einem identifizierten Regaletikett und der dieses Regaletikett an der betreffenden Regalschiene versorgenden Versorgung-Einrichtung definiert.

Die hinsichtlich ihrer Position variablen, also dynamischen Ankerpunkte in Form der Versorgung-Einrichtungen lassen sich jedoch in einem Geschäftslokal auch für andere Zwecke nutzen. So kann gemäß einem weiteren Aspekt die Position eines beweglichen Gegenstands durch Ultrabreitband-Funkkommunikation zwischen ihm und zumindest einer der Versorgung-Einrichtungen zumindest eingegrenzt werden. Bei diesem beweglichen Gegenstand kann es sich beispielsweise um einen Einkaufswagen, einen Einkaufskorb oder auch ein Smartphone eines Kunden und dergleichen handeln. Alle diese Gegenstände können mit einem Ultrabreitband-Funksystem ausgestattet sein. Diese Maßnahme kann dazu genutzt werden, um festzustellen, ob sich der bewegliche Gegenstand, letztendlich der Benutzer des Gegenstands, vor einem Regal aufhält, und insbesondere vor welchem Regal er sich befindet.

Dabei kann durch wiederholtes Eingrenzen der Position des beweglichen Gegenstands eine Bewegungsbahn des Gegenstands ermittelt werden. Diese Maßnahme kann dazu genutzt werden, Vorhersagen über den Zeitpunkt des Eintreffens eines Benutzers vor einem bestimmten Regal oder einer bestimmten Regalschiene oder auch Aussagen über die Zeitdauer des Verweilens eines Benutzers vor einem Regal bzw. einer Regalschiene zu machen.

In diesem Zusammenhang hat es sich weiterhin als besonders vorteilhaft erwiesen, wenn eine zu der Position des Gegenstands korrespondierende Information entweder über einen Bildschirm des Gegenstands oder über ein in seiner Nähe positioniertes Regaletikett, also über dessen Anzeigeeinheit, wiedergegeben wird. Dies ermöglicht eine orts- oder auch verhaltensspezifische Bereitstellung von Information für den Benutzer bzw. Kunden. Diese Funktionalität kann beispielsweise dadurch ausgelöst werden, dass der Gegenstand einen Schwellwert einer Entfernung zur Versorgung-Einrichtung passiert oder sich länger als eine vordefinierte Zeitspanne innerhalb einer Zone befindet, die durch den Abstand zu einer einzigen Regaletikettenanzeige oder die Entfernungen zu einer Anzahl solcher Versorgung-Einrichtungen definiert ist.

Zusammengefasst ermöglicht die Erfindung eine zweistufige Lokalisierung von elektronischen Regaletiketten, wobei zunächst in einem ersten Schritt die Position einer oder mehrerer Versorgung-Einrichtung(en) ermittelt wird, und in einem zweiten Schritt im Rahmen einer Energieversorgung durch die Versorgung-Einrichtung die Position eines Regaletiketts eingegrenzt wird. Die beiden Verfahrensschritte können jedoch auch in umgekehrter Reihenfolge auftreten. Dabei ist es unerheblich, ob die Versorgung-Einrichtung immer am selben Platz ruht oder nicht, weil sich ihre relative Position in Bezug auf an fixen Positionen installierte Access-Points mit Hilfe der eingesetzten Ultrabreitband-Funkkommunikation immer wieder von neuem und vor allem relativ rasch bestimmen bzw. updaten lässt. Die Vielzahl der Versorgung-Einrichtungen in einem Geschäftslokal realisieren also hinsichtlich ihrer eigenen Position dynamisch veränderbare Ankerpunkte zur Verortung der ihnen jeweils zugeordneten (durch sie mit Energie zu versorgenden) Regaletiketten.

Summarisch betrachtet realisiert die Versorgung-Einrichtung bei der betreffenden Regalschiene eine kombinierte Energieversorgung- und Kommunikationsversorgung-Einrichtung für die an der betreffenden Regalschiene befestigten Regaletiketten. Die Versorgung-Einrichtung ist somit für eine lokale kontaktlose Energieübertragung wie auch lokale kontaktlose Kommunikation mit an der Regalschiene befestigten Regaletiketten konfiguriert bzw. ausgebildet. Eine solche Versorgung-Einrichtung kann auch als Regalschienen-Steuereinrichtung oder auch Regalschienen-Controller bezeichnet werden, weil sie alle Aktivitäten der an der betreffenden Regalschiene montierten Regaletiketten steuert, was sowohl das Anzeigeverhalten oder andere eingangs erwähnte Funktionalitäten, das Kommunikationsverhalten, als auch die jeweilige Energieversorgung umfasst.

Die Elektronik der verschiedenen Vorrichtungen des Systems wie auch deren Interface usw. kann mit Hilfe unterschiedlichster passiver wie auch aktiver elektronischer Bauteile auf diskrete wie auch integrierte Weise realisiert sein. Bevorzugt kommt dabei auch ein Mikroprozessor mit entsprechenden Peripheriebausteinen oder ein Mikrokontroller zum Einsatz, worauf eine Software zur Bereitstellung der verschiedenen Funktionalitäten abgearbeitet wird. Auch können sogenannte ASICs (Application-Specific Integrated Circuits) zur Anwendung kommen.

Diese und weitere Aspekte der Erfindung ergeben sich durch die nachfolgend erörterten Figuren.

### Figurenkurzbeschreibung

Die Erfindung wird im Folgenden unter Hinweis auf die beigefügten Figuren anhand von Ausführungsbeispielen noch einmal näher erläutert, auf welche die Erfindung jedoch nicht beschränkt ist. Dabei sind in den verschiedenen Figuren gleiche Komponenten mit identischen Bezugszeichen versehen. Es zeigen auf schematische Weise:
- Fig. 1: ein erfindungsgemäßes elektronisches Regaletiketten-System;
- Fig. 2: ein Blockschaltbild einer Regaletikettenanzeige;
- Fig. 3: ein Blockschaltbild einer "intelligenten" Regalschiene mit einer Versorgung-Einrichtung;
- Fig. 4: die Regalschiene in Frontalansicht;
- Fig. 5A - 5B: eine sich im Laufe der Zeit ändernde Anordnung solcher Regalschienen;
- Fig. 6: eine Leiterplatte der "intelligenten" Regalschiene;
- Fig. 7: die Leiterplatte gemäß der Fig. 6 integriert in die Regalschiene;
- Fig. 8: die "intelligente" Regalschiene mit direkter Integration einer Leiterschleife.

### Beschreibung der Ausführungsbeispiele

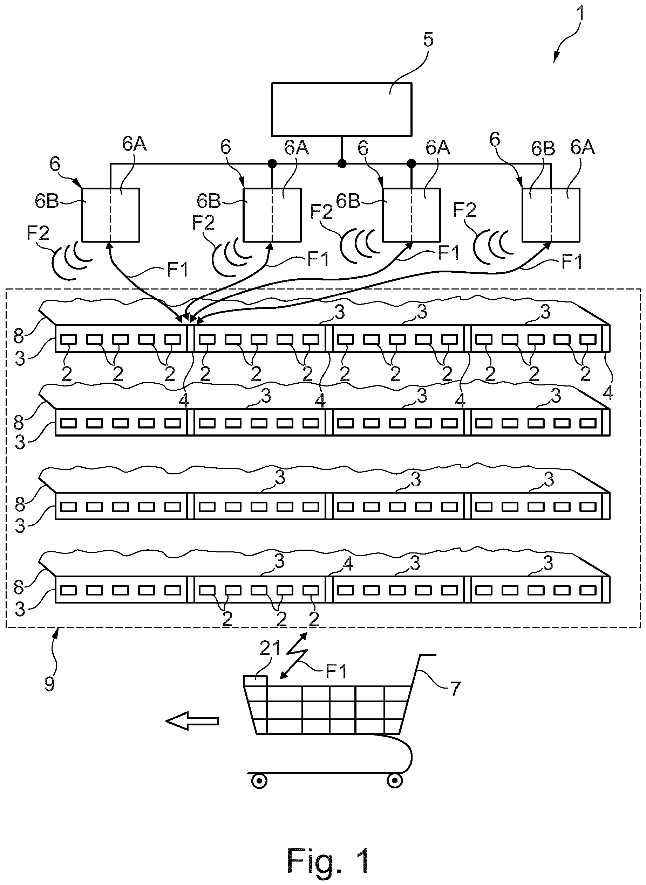

In der Figur 1 ist ein Teil eines Regaletiketten-Systems 1 in einem Geschäftslokal dargestellt, das eine Anzahl von identisch ausgebildeten, nämlich NFC-fähigen, elektronischen Regaletikettenanzeigen 2 umfasst, die an vier nebeneinander positioniert (in einer Reihe entlang der Breite eines Regals 9) angeordneten "intelligenten" Regalschienen 3 befestigt sind, wobei die Regalschienen 3 im Wesentlichen in Frontalansicht zu sehen sind. Jede Regalschiene 3 weist eine elektronische Versorgung-Einrichtung 4 zur kontaktlosen Energieversorgung der Regaletikettenanzeigen 2 und zur kontaktlosen Kommunikation mit einer mit Energie versorgten Regaletikettenanzeige 2 auf, wobei dies mit Hilfe von NFC-Technologie realisiert ist. Ebenfalls dargestellt ist eine Datenverarbeitungseinrichtung, die mit Hilfe eines Servers 5 realisiert ist, der kabelgebunden mit vier identisch ausgebildeten Access-Point 6 verbunden ist, wobei die Access-Points 6 an unterschiedlichen Orten in einem Geschäftslokal positionierte sind und der Server 5 diese Orte kennt.

Die dargestellten Versorgung-Einrichtungen 4 stehen mit dem z.B. ganz linken Access-Point 6, dem sie logisch zugeordnet sind, über erste Funksignale F1 in Funkkontakt. Damit lassen sich von dem Server 5 aus die Bildinhalte der Regaletikettenanzeigen 2 im gesamten Geschäftslokal verändern, gegebenenfalls auch zugehörige Statusinformationen von den Regaletikettenanzeigen 2 abfragen und an den Server 5 übertragen.

Die Regaletikettenanzeige 2 von anderen der hier nicht dargestellten Regale 9 können ebenfalls gruppiert den anderen der dargestellten Access-Point 6 logisch zugeordnet sein, so dass jeweils ein Access-Point 6 eine Teilmenge der Gesamtheit der Regaletikettenanzeigen 2 des Geschäftslokals funktechnisch versorgt

Jeder Access-Point 6 weist zwei Funkmodul 6A und 6B auf, wobei beide nur durch einen Trennstrich voneinander separiert im jeweiligen Access-Point 6 schematisch angedeutet sind.

Das erste Funkmodul 6A kommuniziert mittels des ersten Funksignals F1 und dient zur Definition der Bildinhalte. Es nutz dabei Ultrabereitband-Funktechnologie (im Fachjargon UWB-Technologie genannt, wobei UWB für "ultra wide band" steht) und seine Elektronik wie auch seine Antennenkonfiguration (beides nicht im Detail dargestellt) ist zur Realisierung dieser Technologie ausgebildet.

Das zweite Funkmodul 6B ist als Versorgungssender ausgebildet und versorgt durch Aussendung von gerichteten zweiten Funksignalen F2 selektiv die Versorgung-Einrichtungen 4 mit Energie. Das zweite Funkmodul 6B weist zu diesem Zweck neben seiner Elektronik eine Anzahl von Antennen auf, mit deren Hilfe die Richtung der Energieübertragung (letztendlich die Ausbreitung des zweiten Funksignals F2, das mit z.B. 5 Watt ausgesandt wird) relativ genau einstellbar ist, so dass die zu übertragende Energie präzise bei einer selektierten Versorgung-Einrichtung 4 ankommt. Diese Energieübertragungstechnik ist unter dem Begriff "Power over WiFi" bekannt und die Elektronik wie auch die Antennenkonfiguration des zweiten Funkmoduls 6B sind dementsprechend ausgebildet.

Die "Power over WiFi" Funktionalität, also das zweite Funkmodul 6B, kann in den Access-Point 6 integriert sein oder als separate Baugruppe / separates Gerät realisiert sein, das z.B. steuerungstechnisch mit dem ersten Funkmodul 6A gekoppelt ist.

Jede der Regalschienen 3 ist an einem individuellen Regalboden 8 an dessen Vorderkante montiert. Die vier dargestellten Regalböden 8 gehören alle zu dem nur schematisch angedeuteten Regal 9. Auf den Regalböden 8 können verschiedene Produkte präsentiert werden, die jedoch im vorliegenden Fall nicht dargestellt sind.

In der Visualisierung der Figur 1 sind die Bezugszeichen 2 und 4 lediglich für die oberste Regalschienen-Konfiguration, die vier Regalschienen 3 zeigt, eingetragen und wurden in den drei darunterliegenden Konfigurationen der Regalschienen 3 aus Gründen der vereinfachten Darstellung größtenteils ausgelassen.

Weiterhin zeigt die Figur 1 einen Einkaufswagen 7, der an dem Regal 9 nach links vorbei bewegt wird. Der Einkaufswagen 7 weist eine mobile Funkeinheit 21 auf, die zur Ultraweitband-Funkkommunikation ausgebildet ist. Die Funkeinheit 21 weist z.B. eine batteriebetriebene Funk-Elektronik und eine damit verbundene Antennenkonfiguration auf (beides nicht dargestellt) und stellt zu den in ihrer Reichweite befindlichen Versorgung-Einrichtungen 4 eine UWB-Funkverbindung mit Hilfe der ersten Funksignale F1 her, auf deren Grundlage die Versorgung-Einrichtungen 4 den Abstand zu der Funkeinheit 21 ermitteln können.

Im normalen Betrieb, der als Normalmodus des Systems 1 bezeichnet wird, sind alle Regaletikettenanzeigen 2 wie erwähnt funktechnisch dem ganz linken Access-Point 6 zugeordnet und das verändern der Bildinhalte wird unter Zuhilfenahme der ersten Funksignale F1 über diesen ganz links angeordneten Access-Point 6 gesteuert.

Anders ist demgegenüber die Situation, wenn die Regaletikettenanzeigen 2 gesucht werden. In diesem Fall, der als Ortungsmodus des Systems 1 bezeichnet wird, kommen mehrere, im vorliegenden Fall alle vier Access-Points 6 zum Einsatz und es wird bei der Kommunikation mit zum Beispiel der ganz links oben installierten Versorgung-Einrichtung 4 mit Hilfe der ersten Funksignale F1, die nun nacheinander jeder der Access-Points 6 mit der Versorgung-Einrichtung 4 in einer UWB-Funkkommunikation austauscht, die Entfernung zwischen der jeweiligen Versorgung-Einrichtung 4 und dem jeweiligen Access-Point 6 bestimmt. Die so bestimmten Entfernungen werden an den Server 5 über ein kabelgebundenes Netzwerk (LAN) übermittelt und der Server 5 bestimmt die räumliche Position der betroffenen Versorgung-Einrichtung 4 unter Kenntnis der absoluten Positionen der vier Access-Points 6.

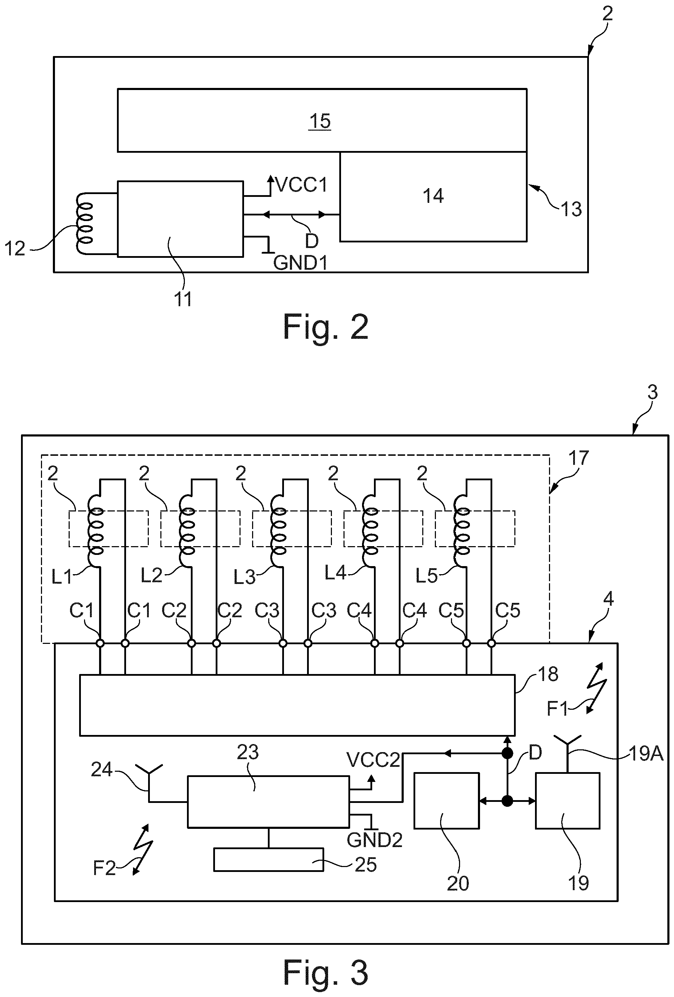

Nachfolgend ist in der Figur 2 ein Blockschaltbild der Regaletikettenanzeige 2 erörtert.

Das Blockschaltbild gemäß der Figur 2 zeigt eine erste NFC-Schnittstelle 11 mit ihrer Kopplungsspule 12, wobei NFC für "Near Field Communication" steht. Mit Hilfe der Kopplungsspule 12 lässt sich eine induktive Kopplung mit einem anderen NFC-fähigen Gerät, im vorliegenden Fall der Versorgung-Einrichtung 4, konkret mit den an der Regalschiene 3 ausgebildeten Leiterschleifen L1 bis L5, etablieren (siehe dazu Fig. 3), wenn die Kopplungsspule 12 entsprechend nahe an eine der Leiterschleifen L1 - L5 herangebracht wird, was bei der an der Regalschienen 3 angebrachten Regaletikettenanzeige 2 der Fall ist. Während der induktiven Kopplung wird mit Hilfe der ersten NFC-Schnittstelle 11 eine erste Versorgungsspannung VCC1 gegenüber einem ersten Bezugspotential GND1 für den Betrieb der gesamten Regaletikettenanzeige 2 generiert, was die Elektronik der Regaletikettenanzeige 2 aktiviert, so dass auch eine kontaktlose bidirektionale Kommunikation von Daten D über ihre erste NFC-Schnittstelle 11 durchführbar ist. Bestandteil dieser Elektronik ist auch ein NFC-Controller, der die gesamte NFC-Funktionalität bereitstellt, hier jedoch nicht im Detail dargestellt ist, jedoch in der ersten NFC-Schnittstelle 11 integriert ist.

Das Blockschaltbild zeigt auch eine mit der ersten NFC-Schnittstelle 11 verbundenen Anzeigeeinheit 13, die sich in eine Bildschirm-Steuerung realisiert als Electronic-Paper-Display-Controller 14 und einen damit verbundenen und damit steuerbaren Bildschirm realisiert als Electronic-Paper-Display-Bildschirm 15 gliedert. Mithilfe des Controllers 14 werden die empfangenen Daten D interpretiert, gegebenenfalls die Bildinhalte des Bildschirms 15 entsprechend verändert oder auch Statusinformationen in Form von Daten D über die NFC-Schnittstelle 11 an die Versorgung-Einrichtung 4 abgegeben.

Im Folgenden ist ein Blockschaltbild der Regalschiene 3 gemäß der Figur 1, insbesondere auch der Versorgung-Einrichtung 4, anhand der Figur 3 erörtert.

Die in der Figur 3 dargestellte Versorgung-Einrichtung 4 ist einerseits zu ihrer eigenen kontaktlosen Versorgung mit Energie wie auch zur kontaktlosen Versorgung der Regaletikettenanzeigen 2 mit Energie ausgebildet. Zu ihrer eigenen Versorgung weist sie einen zum Empfangen des zweiten Funksignals F2 geeigneten Versorgungsempfänger 23 auf, der mit einer Antennenkonfiguration 24 (die mehrere Antennen aufweisen kann) und einer Elektronik ausgerüstet ist, die dazu ausgebildet ist, das zweite Funksignale F2 zu empfangen und die damit übertragene Energie in einem internen elektrische Energiespeicher 25 (aufladbaren Batterie, Akkumulator) zu speichern und die zweite Versorgungsspannung VCC2 gegenüber einem zweiten Bezugspotential GND2 zu generieren.

Im Betrieb kann die Versorgung-Einreichung 4 beispielsweise mit Hilfe ihrer Steuereinheit 20 den Ladezustand des Energiespeichers 25 abfragen bzw. überwachen. Sobald der Ladezustand unter ein bestimmtes Niveau sinkt, kann die Steuereinheit 20 mit Hilfe des ersten Funksignal F1 eine (Neu-)Aufladung anfordern. Diese Anforderung wird von dem Access-Point 6 empfangen, dem die Versorgung-Einrichtung 4 logisch (funktechnisch) zugeordnet ist. Da im System 1 (z.B. dem Server 5) die genaue geographische Position (die dreidimensionalen Koordinaten) jeder der Versorgung-Einrichtungen 4 sowie ihre eindeutige Kennung bekannt ist, weil die Position z.B. zuvor mit Hilfe des Ortungsmodus bestimmt wurde, kann der betroffene Access-Point 6 das zweite Funksignal F2 präzise gerichtet hin zur Position der jeweiligen das Aufladen anfordernden Versorgung-Einrichtung 4 aussenden. Dort wird das zweite Funksignal F2 empfangen und die mit seiner Hilfe übertragene Energie zur Aufladung des dortigen internen Energiespeichers 25 verwendet bzw. genutzt.

In der Visualisierung der Figur 3 ist auch eine Leiterplatte 17 angedeutet dargestellt, auf deren Darstellung in der Figur 1 aus Gründen der Übersichtlichkeit verzichtet wurde. Die Leiterplatte 17 trägt fünf Leiterschleifen L1 bis L5, wobei diese im vorliegenden Fall mit mehreren Schleifen bzw. Windungen ausgeführt sind, was jeweils mit dem Symbol einer elektrischen Spule angedeutet ist. Die Leiterplatte 17 ist in der relativ flachen Struktur der Regalschiene 3 integriert. Die Versorgung-Einrichtung 4 kann mit dieser Leiterplatte 17 verlötet sein oder über Kabel oder Stecker verbunden sein, sodass die Leiterschleifen L1 bis L5 über ihre Schleifen-Anschlüsse C1 bis C5 elektrisch kontaktiert sind.

Korrespondierend zu der Position der jeweiligen Leiterschleife L1 bis L5 ist auch die jeweils dort positionierte Regaletikettenanzeige 2 angedeutet dargestellt. Hier ist auch die elektrische Verbindung der Schleifen-Anschlüsse C1 bis C5 mit der Versorgung-Einrichtung 4, insbesondere jedoch mit der Elektronik ihrer (zweiten) NFC-Schnittstelle 18, konkret dargestellt. Die zweite NFC-Schnittstelle 18 ist bei Vorliegen einer induktiven Kopplung mit der ersten NFC-Schnittstelle 11 der Regaletikettenanzeige 2 zur kontaktlosen Übertragung von elektrischer Energie an die Regaletikettenanzeige 2 sowie zur bidirektionalen kontaktlosen Kommunikation von Daten mit der durch Energieübertragung aktivierten Regaletikettenanzeige 2 ausgebildet. Dabei werden die Leiterschleifen L1 bis L5 mit Hilfe der speziell dazu ausgebildeten NFC-Schnittstelle 18 gemultiplext, es kommt also immer nur eine einzige der Leiterschleifen L1 bis L5 zum Einsatz. Dafür kann ein in der Elektronik bekannter "analog switch" zum Einsatz kommen.

Die Versorgung-Einrichtung 4 weist weiterhin ein Accesspoint-Kommunikationsinterface 19 auf, das zum funkbasierten kommunizieren mit dem in der Figur 1 dargestellten Access-Point 6 ausgebildet ist. Es weist eine Antenennkonfiguration 19A auf, die auch aus mehreren Einzelantennen aufgebaut sein kann, und eine Elektronik, mit der die ersten Funksignale F1 empfangbar bzw. ausgesendet werden können. Insbesondere ist das Accesspoint-Kommunikationsinterface 19 für die Ultraweitband-Funkkommunikation ausgebildet.

Die Steuereinheit 20 dient zur Steuerung der internen Abläufe wie auch der Energieversorgung der Regaletikettenanzeige 2 und der Kommunikation mit der Regaletikettenanzeige 2, sowie der Kommunikation mit dem Access-Point 6. Sie ist mit Hilfe eines Mikrocontroller realisiert, der über einen bidirektionalen Datenbus mit der zweiten NFC-Schnittstelle 18 und dem Accesspoint-Kommunikationsinterface 19 sowie dem Versorgungsempfänger 23 verbunden ist.

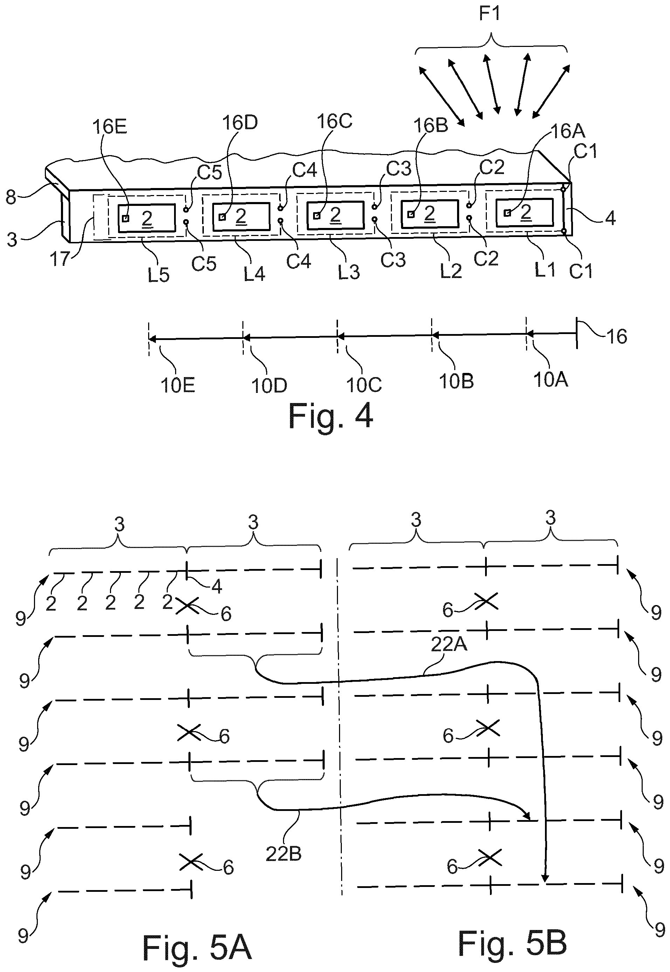

In der Figur 4 ist die ganz links oben im Regal 9 dargestellte Regalschiene 3 in einer detaillierteren Ansicht dargestellt. Von der Leiterplatte 17, welche die Leiterschleifen L1 bis L5 trägt, ist nur ihr linker Rand sichtbar dargestellt, um die Visualisierung nicht zu überladen. In dieser Visualisierung sind nur die ersten Schleifen-Anschlüsse C1 mit der Versorgung-Einrichtung 4 verbunden dargestellt. Gleiches gilt jedoch sinngemäß auch für die verbleibenden vier Schleifenanschlüsse C1 bis C5, deren direkte Verbindung mit der Versorgung-Einrichtung 4 aus Gründen der Übersichtlichkeit unterlassen wurde. Weiterhin ist symbolisiert dargestellt, dass jede der Regaletikettenanzeigen 2 sie eindeutig identifizierende Kennungsdaten 16A bis 16E enthält, die in einem internen Speicher permanent und unveränderbar gespeichert sind.

Nachdem zuvor bereits erörtert wurde, mit welchen Maßnahmen die Position der (z.B. ganz links oben im Regal 9 lokalisierten) Versorgung-Einrichtung 4 ermittelt wird, ist an dieser Stelle die Ortung der fünf an dieser Regalschiene 3 befestigten Regaletikettenanzeigen 2 erklärt. Im zuvor erwähnten Ortungsmodus aktiviert die Versorgung-Einrichtung 4 nun sequenziell die fünf Regaletikettenanzeigen 2. Zu diesem Zweck wird zunächst unter Zuhilfenahme der ganz rechten Leiterschleife L1 eine induktive Kopplung über die beiden NFC-Schnittstellen 11 und 18 mit der dort positionierten (ganz rechten) Regaletikettenanzeigen 2 hergestellt und dabei Energie an diese übertragen, sodass die Elektronik der Regaletikettenanzeige 2 aktiviert wird. Danach werden mit Hilfe der gekoppelten NFC-Schnittstellen 11 und 18 die eindeutigen ersten Kennungsdaten 16A abgerufen und in der Versorgung-Einrichtung 4 gespeichert. Danach wird Energieversorgung, also die Kopplung beendet, und die Regaletikettenanzeige 2 deaktiviert. Dieser Vorgang wird nun Schritt für Schritt für jede der anderen Leiterschleifen L2 bis L5 abgearbeitet, bis alle eindeutigen Kennungsdaten 16A bis 16E bei der Versorgung-Einrichtung 4 vorliegen. Die so ermittelten eindeutigen Kennungsdaten 16A - 16E werden sodann über das Accesspoint-Kommunikationsinterface 19 an den für die betreffende Versorgung-Einrichtung 4 zuständigen Access-Point 6 abgegeben, was im vorliegenden Fall der in der Figur 1 ganz links dargestellte Access-Point 6 ist. Von dort werden diese Kennungsdaten 16A bis 16E an den Server 5 weitergeleitet, der bereits die absolute Position der ganz links oben lokalisierten Versorgung-Einrichtung 4 ermittelt hat und der auch über die Dimension der Regalschiene 3 wie auch die Positionen bzw. Abdeckungszonen der jeweiligen Leiterschleifen L1 bis L5 entlang der Regalschiene 3 informiert ist. Aus diesen Informationen, insbesondere aus dem Zusammenhang zwischen der jeweiligen Leiterschleife L1 bis L5 (z.B. deren Reihenfolge in der sie benutzt wurden) und der über die jeweilige Leiterschleife L1 - L5 bezogenen Kennungsdaten 16A bis 16E, ermittelt der Server 5 nun die jeweilige Regaletikettenanzeige-Position 10A bis 10E für jede Regaletikettenanzeige 2 entlang der Regalschiene 3, z.B. gemessen von einer bekannten Referenzposition 16, z.B. der bekannten Position der Versorgung-Einrichtung 4, oder auch vom rechten bzw. linken Rand der Regalschiene 3.

Soweit die Orientierung der Regalschiene 3 für den Server 5 im Raum eindeutig ist, was sich z.B. durch Ermittlung und damit auch Kenntnis einiger oder auch aller Positionen der Versorgung-Einrichtungen 4 des Regals 9 ermitteln lässt, lässt sich von dem Server 5 auch die eindeutige Position jeder der Regaletikettenanzeigen 2 im Raum bestimmen.

In weiterer Folge ist mit Hilfe der Figuren 5A und 5B ein Anwendungsszenario für das Verfahren zum Orten der elektronischen Regaletikettenanzeigen 2 beschrieben.

Hierbei ist davon ausgegangen, dass in der Figur 5A eine Ausgangskonfiguration der Regale 9 und in der Figur 5B eine Endkonfiguration der Regale 9 dargestellt, wobei die beiden Figuren 5A und 5B mit Hilfe einer Trennlinie voneinander separiert sind. Die dargestellten Regale 9 sind von oben betrachtet visualisiert und es sind pro Regal 9 jeweils zwei nebeneinanderliegende Regalschienen 3 dargestellt. Die ganz links oben dargestellte Struktur aus Regaletikettenanzeigen 2 und Versorgung-Einrichtung 4 repliziert sich über die dargestellten zwei Spalten und vier Reihen der Regal 9, sodass aus Gründen der Übersichtlichkeit die Bezugszeichenvergabe lediglich auf die linke obere Regalschiene 3 beschränkt wurde. In den Figuren 5A und 5B sind zudem drei Access-Points 6 visualisiert, die an der Decke eines Geschäftslokales, in dem die Regale 9 aufgestellt sind, an Positionen zwischen den Regalen 9 installiert sind.

Zu beachten ist, dass in der Figur 5A die beiden unteren, rechten Regalpositionen nicht mit Regalen 9 besetzt sind. Ausgehend von der Ausgangskonfiguration gemäß der Figur 5A wurden im Übergang zur Endkonfiguration gemäß der Figur 5B zwei der Regale 9 entsprechend den Pfeilen 22A und 22B an die in der Ausgangskonfiguration freie Regalpositionen vertragen.

Um nun die Regaletikettenanzeigen 2 zu orten, wird der Ortungsmodus aktiviert und zunächst die Positionen der einzelnen Versorgung-Einrichtungen 4 mit Hilfe der UWB-Funkkommunikation wie erörtert ermittelt. Für jene Versorgung-Einrichtungen 4, für die sich eine nur geringfügige oder keine Ortsveränderung ergibt, wird das Verfahren bereits hier beendet, weil davon ausgegangen wird, dass die zugehörigen Regalschienen 3 keiner Ortsveränderung unterzogen wurden.

Für jene Versorgung-Einrichtungen 4, die nun an dem gemäß den Pfeilen 22A und 22B hinsichtlich ihrer Position veränderten Regalen 9 installiert sind, für die also eine über einen Schwellenwert hinausgehende Veränderung ihrer Position festgestellt wurde, werden in einem zweiten Schritt die dort installierten Regaletikettenanzeigen 2 während ihrer individuellen Energieversorgung identifiziert und die damit erhaltenen Kennungsdaten 16A bis 16E an den Server 5 zur Festlegung der jeweiligen Position jeder Regaletikettenanzeige 2 übermittelt. Danach nimmt das System 1 wieder den Normalmodus ein.

Die an ihren neuen Positionen lokalisierten Versorgung-Einrichtungen 4 melden sich nun beim nächstgelegenen Access-Point 6 einfach funktechnisch an, weil sie ja bereits im System 1 bekannt sind und zuvor registrierte wurden, und stehen dort wie gehabt zur Verfügung. Ebenso kann beim nächstgelegenen Access-Point 6 eine Neuregistrierung erfolgen.

An dieser Stelle sei jedoch erwähnt, dass der zuvor erörterte Abbruch des Verfahrens für jene Versorgung-Einrichtungen 4, die ihre Position nicht verändert haben, nicht zwingend erfolgen muss. Das Verfahren kann auch für diese Versorgung-Einrichtungen 4 wie vorangehend erörtert abgearbeitet werden, also auf die Gesamtheit der Versorgung-Einrichtungen 4 und die damit versorgten Regaletikettenanzeigen 2 angewandt werden, was letztendlich zu einer kompletten Inventarisierung der Regaletikettenanzeigen 2 führt. Dies kann dann sinnvoll sein, wenn die Gesamtheit der Positionen gewollt zu bestimmen ist oder getestet wird, ob einzelne Regaletikettenanzeigen 2 aus den involvierten Regalen bzw. den dortigen Regalschienen 3 (obwohl diese nicht vertragen wurden) entfernt wurden oder an andere Orte vertragen oder entlang der Regalschienen 3 verschoben wurden usw.

Mit den so ermittelten neuen Positionen wird mit Hilfe des Servers 5 die digitale dreidimensionale Landkarte der Regaletikettenanzeigen 2 an die nunmehr vorliegende Realität in dem Geschäftslokal angepasst bzw. eine existierende dreidimensionale Karte verifiziert.

Mit Hilfe des zur Ultrabreitband-Funkkommunikation ausgebildeten Accesspoint-Kommunikationsinterface 19 lassen sich mit Hilfe der ersten Funksignale F1 aber auch bewegliche Objekte verfolgen bzw. identifizieren, die sich so wie der in der Figur 1 dargestellte Einkaufswagen 7 vor dem Regal 9 vorbeibewegen oder dort verharren. Nach erfolgter Erkennung, dass sich ein solcher Einkaufswagen 7 in einen vordefinierten Bereich vor z.B. der zweiten von links gezählten Regalschiene 3 der untersten Regalebenen befindet, kann mit Hilfe der dort verbauten Versorgung-Einrichtung 4 über die an dieser Regalschiene 3 befestigten Regaletikettenanzeigen 2 eine spezielle die dort präsentierten Produkte betreffende Information angezeigt werden.

Gemäß einem weiteren Ausführungsbeispiel kann der Access-Point 6 auch so ausgebildet sein, dass das erste Funkmodul 6A mit seiner UWB-Technologie nur zur Abstandsbestimmung und im Kollektiv mit anderen Access-Points 6 zur Positionsbestimmung benutzt wird. Das zweite Funkmodul 6B kann wie erörtert zur Energieübertragung konfiguriert und eingesetzt werden. Zusätzlich dazu kann noch ein drittes Funkmodul (nicht dargestellt) realisiert sein, das zur Kommunikation von Anzeigeinhalten, Befehlen oder Statusmeldungen gemäß einem z.B. im allgemeinen Teil der Beschreibung erwähnten proprietären Zeitschlitzkommunikationsverfahren oder einem standardisierten Kommunikationsverfahren (ZigBee, Bluetooth, ...) ausgebildet ist. Demgemäß weist auch die elektronische Versorgung-Einrichtung 4 anstelle der in der Figur 3 dargestellten zwei Funk-Interface 19, 23 ein zusätzliches Funkinterface zur Kommunikation mit dem dritten Funkmodul das Access-Points 6 auf.

Nachfolgend ist noch auf eine Realisierung der Leiterplatte 17 und der Regalschiene 3 eingegangen.

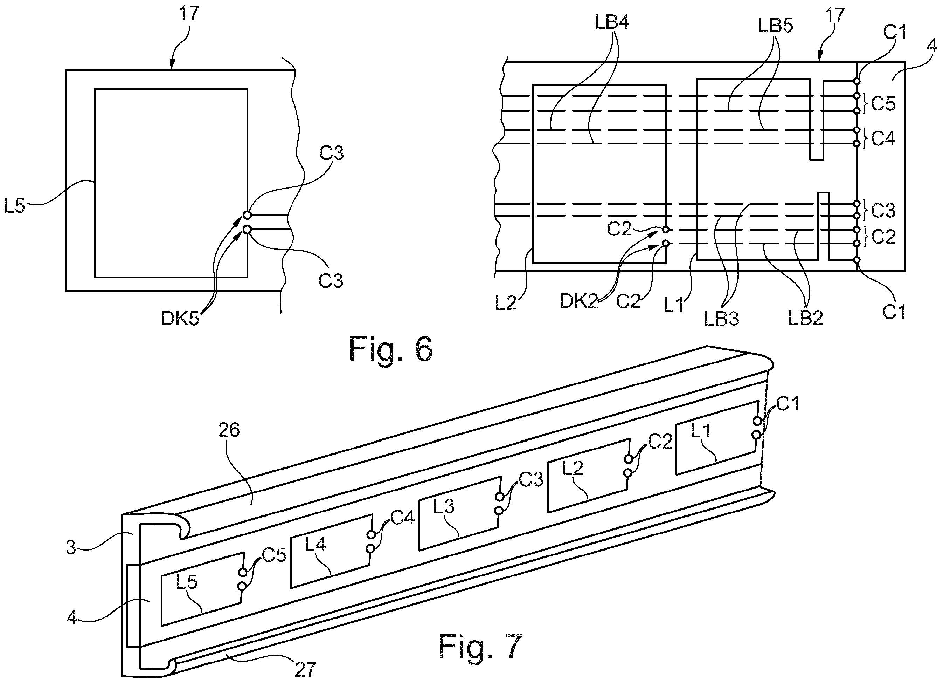

In der Figur 6 ist beispielhaft eine solche Leiterplatte 17 abgebildet, die beidseitig Leiterbahnen aufweist. Aus Gründen der Übersichtlichkeit sind von den fünf Leiterschleifen L1 - L5 lediglich drei dargestellt. An ihrer Vorderseite sind die großflächigen Leiterschleifen L1, L2 und L5 zu sehen. An ihrer Rückseite sind die eng aneinander verlaufenden Leiterbahnen LB2 - LB5 der jeweiligen Schleifen-Anschlüsse C2 und C5 zu sehen, die entlang der Längserstreckung der Leiterplatte 17 verlaufen. Die Schleifen-Anschlüsse C1 verlaufen auf der Vorderseite. Die Schleifen-Anschlüsse C1 - C5 sind alle mit der Versorgung-Einrichtung 4 verbunden. Dort, wo die Schleifen-Anschlüsse C2 und C5 bei den Leiterschleifen L2 und L5 enden, befinden sich Durchkontaktierungen DK2 und DK5 von der Vorderseite auf die Rückseite, sodass die Leiterschleifen L2 und L5, elektrisch leitend mit ihren Schleifen-Anschlüssen C2 und C5 verbunden sind. Gleiches gilt sinngemäß für die nicht visualisierten Leiterschleifen L3 und L4, ihre Schleifen-Anschlüsse C3 und C4, ihre Leiterbahnen LB3 und LB4 und die beiden Durchkontaktierungen DK3 und DK4. Die an der Leiterplatte 17 angedeutete Versorgung-Einrichtung 4 kann z.B. an der Rückseite der Leiterplatte 17 angebracht sein. Auch können die elektronischen Bauteile ihrer Elektronik direkt auf die Leiterplatte 17 angelötet sein.

Die Figur 7 zeigt abschließen eine Möglichkeit der mechanischen Integration der Leiterplatte 17 in die Regalschiene 3. Dabei bildet die Leiterplatte 17 einen Teil der Wand eines Aufnahmeschachts, der zur Aufnahme einer Anzahl von Regaletikettenanzeigen 2 dient. Der Aufnahmeschacht weist an der Stelle, wo die Leiterplatte 17 anzubringen ist, eine der Dicke der Leiterplatte 17 entsprechende Vertiefung auf, in welche die Leiterplatte 17 eingesetzt wird, so dass ihre Vorderseite im Wesentlichen plan mit dem Rest des Wand des Aufnahmeschachts verläuft. An der Vorderseite der Regalschiene 3 ist an ihrem oberen Ende eine obere Führungsleiste 26 und an ihrem unteren Ende eine untere Führungsleiste 27 ausgebildet. Diese Führungsleisten 26 und 27 lassen sich so weit nach oben und unten verbiegen, dass die Regaletikettenanzeige 2 einrasten kann. Zudem lässt sich die Regaletikettenanzeige 2 ungehindert entlang der Regalschiene 3 verschieben und völlig frei platzieren. Die Unterbringung der Versorgung-Einrichtung 4 an der Rückseite der Leiterplatte 17 ist dann von Vorteil, wenn die Regaletikettenanzeigen 2 entlang der Vorderseite der Regalschiene 3 ungehindert verschiebbar sein sollen, so wie dies im vorliegenden Fall möglich ist. Für diesen Fall muss die Vertiefung des Aufnahmeschachts entsprechend angepasst sein, damit auch die elektronischen Bauteile der Versorgung-Einrichtung 4 darin Platz finden.

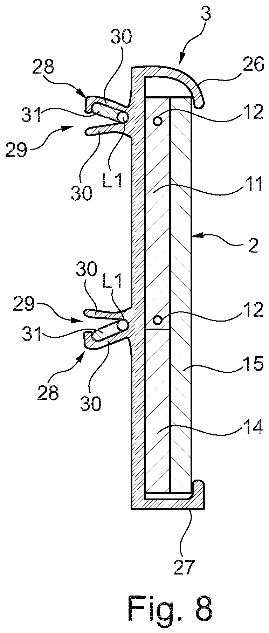

Die Figur 8 zeigt in einer Querschnittsdarstellung die Regalschiene 3 mit einer Leiterschleifen-Aufnahme 28 an ihrer Rückseite, wobei die Leiterschleifen-Aufnahme 28 direkt aus dem Material der Regalschiene 3 (als aus dem Kunststoff) gefertigt ist. Die Leiterschleifen-Aufnahme 28 weist eine spaltförmige Vertiefung 29 auf, in welche ein Draht der Leiterschleife L1 unverrückbar eingelegt ist. Die spaltförmige Vertiefung 29 wird von zwei Wänden 30 flankiert, die derart dimensioniert sind, dass mit ihrer Hilfe ein Schnappmechanismus, der den Draht in seiner Sollposition fixiert, realisiert ist. Zu diesem Zweck ist ein band- oder streifenförmiges Material 31 (Band oder Materialstreifen) in die spaltförmige Vertiefung 29 eingesetzt, das einerseits den Draht der Leiterschleife L1 gegen den Boden der Vertiefung 29 presst und sich selbst andererseits an einem nasen- bzw. hakenartigem Ende von jeweils der äußeren Wand 30 abstützt bzw. dort einrastet.

Wie auch immer die Integration der Leiterschleife(n) L1 (bis L5) in die Regalschiene 3 oder die Befestigung der Leiterschleife(n) L1 (bis L5) an der Regalschiene 3 realisiert ist, hat es sich weiterhin als besonders vorteilhaft erwiesen, dass die elektronische Versorgung-Einrichtung 4 in die Regalschiene integriert oder an ihr befestigt ist. Somit lässt sich eine Regalschiene mit individueller elektronischer Energieversorgung realisieren. Dabei kann die Versorgung-Einrichtung 4 z.B. auch direkt an der Leiterplatte 17 ausgebildet sein oder als Modul mit ihr verbunden sein oder als Modul mit der Regalschiene 3 mechanisch gekoppelt sein und mit der Leiterschleife L1 (bis L5) der Regalschiene 3 elektrisch leitend verbunden sein. Dadurch kann die Regalschiene 3 als Ganzes inklusive ihrer Versorgung-Einrichtung 4 vertragen und an einem anderen Ort problemlos wieder in Betrieb genommen werden.

Sowohl in der Figur 7 wie auch in der Figur 8 wurde auf die Darstellung eines Befestigungsmechanismus für die Regalschiene 3, der die Befestigung der Regalschiene 3 an einer anderen Struktur, wie z.B. einem Regalboden 8 erlaubt, verzichtet, weil dieses Detail nicht die Erfindung betrifft und auf vielfältige dem Fachmann zugängliche Art und Weise realisierbar ist.

Es wird abschließend noch einmal darauf hingewiesen, dass es sich bei den vorangehend detailliert beschriebenen Figuren nur um Ausführungsbeispiele handelt, welche vom Fachmann in verschiedenster Weise modifiziert werden können, ohne den Bereich der Erfindung zu verlassen. Es wird der Vollständigkeit halber auch darauf hingewiesen, dass die Verwendung der unbestimmten Artikel "ein" bzw. "eine" nicht ausschließt, dass die betreffenden Merkmale auch mehrfach vorhanden sein können.

## Patentansprüche

1. Verfahren zum Orten eines ortsunbekannten elektronischen Regaletiketts (2), insbesondere realisiert als elektronische Regaletikettenanzeige, eines elektronischen Regaletiketten-System (1),
wobei das System (1) aufweist:
- eine Anzahl von ortsbekannten Access-Points (6), die an unterschiedlichen Positionen jeweils in einem Abstand zu einem Regal (9) positioniert sind,
+ wobei das Regal (9) zumindest eine Regalschiene (3) aufweist und wobei
+ eine der Regalschienen (3) zumindest ein elektronisches Regaletikett (2) aufweist,
**dadurch gekennzeichnet, dass**
+ das zumindest eine Regaletikett (2) kontaktlos mit Energie versorgbar ausgebildet ist und die Regalschiene (3) weiter eine an der Regalschiene (3) lokalisierte elektronische Versorgung-Einrichtung (4) aufweist, die zur kontaktlosen Energieversorgung des zumindest einen Regaletiketts (2) ausgebildet ist,
wobei das Verfahren die folgenden Verfahrensschritte aufweist, nämlich:
- Bestimmen der Position der elektronischen Versorgung-Einrichtung (4) in Bezug auf die ortsbekannten Access-Points (6) durch Verwendung einer Ultrabreitband-Funkkommunikation zwischen den Access-Points (6) und der Versorgung-Einrichtung (4),
- Bestimmung der Position des zumindest einen Regaletiketts (2) in Bezug auf die elektronische Versorgung-Einrichtung (4) mittels einer Identifizierung des Regaletiketts (2) durch die elektronische Versorgung-Einrichtung (4) während seiner Energieversorgung.

2. Verfahren nach Anspruch 1, wobei die Bestimmung der Position der elektronischen Versorgung-Einrichtung (4) auf Abstandsbestimmung zwischen ihr und jedem der involvierten Access-Points (6) unter Ausnutzung der jeweiligen Ultrabreitband-Funkkommunikation basiert.

3. Verfahren nach Anspruch 1, wobei die Identifizierung des zumindest einen an dem Regal (9) installierten elektronischen Regaletiketts (2) während seiner Energieversorgung erfolgt.

4. Verfahren nach einem der vorangehenden Ansprüche 2 bis 3, wobei während der Energieversorgung des Regaletiketts (2) dieses durch ein Abfragen seiner eindeutigen Kennung (16A - 16E) identifiziert wird.

5. Verfahren nach einem der vorangehenden Ansprüche, wobei zur kontaktlosen Energieübertragung zumindest eine an der Regalschiene (3) ausgebildete erste Leiterschleife (L1 - L5) zum Einsatz kommt, die mit ihren zwei Schleifen-Anschlüssen (C1 - C5) an die Versorgung-Einrichtung (4) angeschlossen ist und zur induktiven Kopplung mit einer örtlich dazu korrespondierenden zweiten Leiterschleife (12) des Regaletiketts (2) dient.

6. Verfahren nach Anspruch 5, wobei zur Ermittlung der Position eines Regaletiketts (2) entlang der Regalschiene (3) mehrere erste Leiterschleifen (L1 - L5) an unterschiedlichen Orten entlang der Regalschiene (3) positioniert zum Einsatz kommen.

7. Verfahren nach Anspruch 6, wobei mit der Versorgung-Einrichtung (4) eine individuelle Energieversorgung am Ort der jeweiligen ersten Leiterschleife (L1 - L5) durchgeführt wird, wenn dort ein Regaletikett (2) positioniert ist.

8. Verfahren nach einem der vorangehenden Ansprüche, wobei sowohl auf der Seite des Regaletiketts (2) als auch auf der Seite der Versorgung-Einrichtung (4) zur kontaktlosen Energieversorgung, insbesondere auch Identifizierung, eine NFC-Schnittstelle (11, 18) zur Anwendung kommt.

9. Verfahren nach einem der vorangehenden Ansprüche, wobei das elektronische Regaletikett (2) realisiert als Regaletikettenanzeige eine energiesparende Anzeigeeinheit (13), insbesondere basierend auf Electronic-Ink- bzw. Electronic-Paper-Technologie usw., aufweist, womit auch während einer Zeitpanne ohne Energieversorgung eine statische Bildinformation mit Hilfe der Anzeigeeinheit (13) dargestellt wird.

10. Verfahren nach einem der vorangehenden Ansprüche, wobei positionsrelevante Ergebnisse der Ultrabreitband-Funkkommunikation entweder von der Versorgung-Einrichtung (4) oder von dem involvierten Access-Point (6) an eine Datenverarbeitungseinrichtung (5) zur Ortsbestimmung der Versorgung-Einrichtung (4) leitungsgebunden oder per Funk übermittelt werden.

11. Verfahren nach Anspruch 10, wobei die Identität eines während seiner Energieversorgung von der Versorgung-Einrichtung (4) identifizierten Regaletiketts (2) an besagte Datenverarbeitungseinrichtung (5) kommuniziert wird und bei der Datenverarbeitungseinrichtung (5) der Ort des betreffenden Regaletiketts (2) relativ zu dem Ort der betreffenden Versorgung-Einrichtung (4) zumindest eingegrenzt wird.

12. Verfahren nach einem der vorangehenden Ansprüche, wobei die Position eines beweglichen Gegenstands (7) durch Ultrabreitband-Funkkommunikation zwischen ihm und zumindest einer der Versorgung-Einrichtungen (4) zumindest eingegrenzt wird.

13. Verfahren nach Anspruch 12, wobei durch wiederholtes Eingrenzen der Position des beweglichen Gegenstands (7) eine Bewegungsbahn des Gegenstands (7) ermittelt wird.

14. Verfahren nach einem der Ansprüche 12-13, wobei eine zu der Position des Gegenstands (7) korrespondierende Information entweder über einen Bildschirm des Gegenstands (7) oder über ein in seiner Nähe positioniertes Regaletikett (2), das als Regaletikettenanzeige realisiert ist, wiedergegeben wird.

## Claims

1. A method for locating an unlocalized electronic shelf label (2), particularly implemented as an electronic shelf label display, of an electronic shelf label system (1),
wherein the system (1) comprises:
- a number of localized access points (6) which are positioned at different locations, each at a distance from a shelf (9),
+ wherein the shelf (9) comprises at least one shelf rail (3) and wherein
+ one of the shelf rails (3) comprises at least one electronic shelf label (2),
**characterized in that**
+ the at least one shelf label (2) is designed to be wirelessly powered and the shelf rail (3) further comprises an electronic supply unit (4) located on the shelf rail (3) and designed to wirelessly power the at least one shelf label (2),
wherein the method comprises the following method steps, namely:
- determining the position of the electronic supply unit (4) relative to the localized access points (6) using ultra-wideband radio communication between the access points (6) and the supply unit (4),
- determining the position of the at least one shelf label (2) relative to the electronic supply unit (4) by means of an identification of the shelf label (2) via the electronic supply unit (4) during its power supply.

2. The method according to claim 1, wherein the determination of the position of the electronic supply unit (4) is based on distance measurements between it and each of the access points (6) involved using the respective ultra-wideband radio communication.

3. The method according to claim 1, wherein identification of the at least one electronic shelf label (2) installed on the shelf (9) takes place during its power supply.

4. The method according to any one of the preceding claims 2 to 3, wherein the shelf label (2) is identified during its power supply by querying its unique identifier (16A - 16E).

5. The method according to any one of the preceding claims,
wherein at least one first conductor loop (L1 - L5) formed on the shelf rail (3) is used for wireless energy transfer, which conductor loop is connected to the supply unit (4) via its two loop terminals (C1 - C5) and is used for inductive coupling with a locally corresponding second conductor loop (12) of the shelf label (2).

6. The method according to claim 5, wherein multiple first conductor loops (L1 - L5) are positioned at different locations along the shelf rail (3) to determine the position of a shelf label (2) along the shelf rail (3).

7. The method according to claim 6, wherein an individual power supply is provided by the supply unit (4) at the location of the respective first conductor loop (L1 - L5) when a shelf label (2) is positioned there.

8. The method according to any one of the preceding claims,
wherein an NFC interface (11, 18) is used on both the side of the shelf label (2) and the side of the supply unit (4) for wireless power supply, particularly also for identification.

9. The method according to any one of the preceding claims,
wherein the electronic shelf label (2), implemented as a shelf label display, includes an energy-saving display unit (13), particularly based on electronic ink or electronic paper technology, enabling the display of static image information with the help of the display unit (13), even during a period without power supply.

10. The method according to any one of the preceding claims,
wherein position-relevant results of the ultra-wideband communication are transmitted, either wired or wirelessly, from the supply unit (4) or the access point (6) involved to a data processing device (5) for determining the location of the supply unit (4).

11. The method according to claim 10, wherein the identity of a shelf label (2) identified by the supply unit (4) during its power supply is communicated to the aforementioned data processing device (5) and the location of the respective shelf label (2) is at least narrowed down relative to the location of the respective supply unit (4) by the data processing device (5).

12. The method according to any one of the preceding claims,
wherein the position of a movable object (7) is at least narrowed down using ultra-wideband radio communication between the object and at least one of the supply units (4).

13. The method according to claim 12, wherein the movement path of the object (7) is determined by repeatedly narrowing down the position of the movable object (7).

14. The method according to any one of claims 12-13, wherein information corresponding to the position of the object (7) is displayed either via a screen of the object (7) or via a shelf label (2) positioned nearby and implemented as a shelf label display.

## Revendications

1. Méthode de localisation d'une étiquette de rayon électronique inconnue (2), notamment réalisée sous forme d'un affichage d'étiquette de rayon électronique d'un système d'étiquettes électroniques de rayon (1), dans lequel le système (1) comprend :
- un certain nombre de points d'accès connus localement (6), qui sont positionnés à différentes positions à distance d'un rayon (9),
+ dans lequel le rayon (9) présente au moins un rail de rayon (3) et dans lequel
+ un des rails de rayon (3) présente au moins une étiquette de rayon électronique (2),
**caractérisé en ce que**
+ la au moins une étiquette de rayon (2) est conçue pour être alimentée en énergie sans contact et le rail de rayon (3) présente en outre un dispositif d'alimentation électronique (4) situé sur le rail de rayon (3), qui est conçu pour l'alimentation en énergie sans contact d'au moins une étiquette de rayon (2),
dans lequel le procédé comprend les étapes de procédé suivantes, à savoir :
- détermination de la position du dispositif d'alimentation électronique (4) par rapport aux points d'accès (6) connus en utilisant une communication radio à bande ultra-large entre les points d'accès (6) et le dispositif d'alimentation (4),
- détermination de la position d'au moins une étiquette de rayon (2) par rapport au dispositif d'alimentation électronique (4) au moyen d'une identification de l'étiquette de rayon (2) par le dispositif d'alimentation électronique (4) lors de son alimentation en énergie.

2. Procédé selon la revendication 1, dans lequel la détermination de la position du dispositif d'alimentation électronique (4) est basée sur la détermination de la distance entre celui-ci et chacun des points d'accès (6) concernés en utilisant la communication radio à bande ultra-large respective.

3. Procédé selon la revendication 1, dans lequel l'identification d'au moins une des étiquettes électroniques de rayon (2) installées sur le rayon (9) s'effectue pendant son alimentation électrique.

4. Procédé selon une des revendications 2 à 3 précédentes, dans lequel lors de l'alimentation en énergie de l'étiquette de rayon (2) celle-ci est identifiée par interrogation de son identifiant unique (16A-16E).

5. Procédé selon une des revendications précédentes, dans lequel en vue du transfert d'énergie sans contact, au moins une première boucle conductrice (L1-L5) réalisée sur le rail de rayon (3) est utilisée, qui avec ses deux connexions en boucle (C1-C5) est connectée au dispositif d'alimentation (4) et sert au couplage inductif avec une deuxième boucle conductrice (12) localement correspondante de l'étiquette de rayon (2).

6. Procédé selon la revendication 5, dans lequel pour déterminer la position d'une étiquette de rayon (2) le long du rail de rayon (3), une pluralité de premières boucles conductrices (L1-L5) positionnés à différents endroits le long du rail de rayon (3) sont utilisées.

7. Procédé selon la revendication 6, dans lequel le dispositif d'alimentation (4) effectue une alimentation énergétique individuelle à l'emplacement de la première boucle conductrice respective (L1-L5) si une étiquette de rayon (2) y est positionnée.

8. Procédé selon une des revendications précédentes, dans lequel une interface NFC (11, 18) est utilisée tant du côté de l'étiquette de rayon (2) que du côté du dispositif d'alimentation (4) pour l'alimentation en énergie sans contact, notamment également l'identification.

9. Procédé selon une des revendications précédentes, dans lequel l'étiquette électronique de rayon (2) réalise comme affichage d'étiquette de rayon une unité d'affichage à économie d'énergie (13), notamment à base d'encre électronique ou de Technologie du papier électronique, etc., avec laquelle pendant une période sans alimentation électrique, une image statique d'information est également représentée à l'aide de l'unité d'affichage (13).

10. Procédé selon une des revendications précédentes, dans lequel des résultats pertinents pour la position de la communication radio à bande ultra-large sont transmis soit par câble soit par radio depuis le dispositif d'alimentation (4) ou depuis le point d'accès concerné (6) à un dispositif de traitement de données (5) pour déterminer l'emplacement du dispositif d'alimentation (4).

11. Procédé selon la revendication 10, dans lequel l'identité d'une étiquette de rayon (2) identifiée pendant son alimentation en énergie par le dispositif d'alimentation (4) est communiquée audit dispositif de traitement de données (5) et au niveau du dispositif de traitement de données (5) l'emplacement de l'étiquette de rayon (2) par rapport à l'emplacement du dispositif d'alimentation respectif (4) est au moins limitée.

12. Procédé selon une des revendications précédentes, dans lequel la position d'un objet en mouvement (7) par communication radio à bande ultra-large entre celui-ci et au moins une des installations d'alimentation (4) est au moins limitée.

13. Procédé selon la revendication 12, dans lequel un trajet de déplacement de l'objet (7) est déterminé en limitant de manière répétée la position de l'objet en mouvement (7).

14. Procédé selon une des revendications 12 - 13, dans lequel une information correspondant à la position de l'objet (7) est restituée soit via un écran de l'objet (7) soit via une étiquette de rayon (2) positionnée à proximité de celui-ci, qui est mise en œuvre sous la forme d'un affichage d'étiquette de rayon.
